# EUROPÄISCHE PATENTSCHRIFT

(11) **EP 1 462 027 B1**
(45) Veröffentlichungstag und Bekanntmachung des Hinweises auf die Patenterteilung: **19.05.2010**
(21) Anmeldenummer: 04004842.3
(22) Anmeldetag: 02.03.2004
(51) Int. Cl.: A47B 21/00, B01L 9/02, G06F 1/16

(54) **PC-Arbeitsplatzanordnung für einen Laborraum**
Computer workstation for a laboratory
Poste de travail d'ordinateur pour laboratoire

(30) Priorität: 27.03.2003 DE 20305002 U
(43) Veröffentlichungstag der Anmeldung: 29.09.2004
(73) Patentinhaber: Waldner Labor- und Schuleinrichtungen GmbH, 01097 Dresden (DE)
(72) Erfinder: Keibach, Dieter, 88267 Vogt (DE)
(74) Vertreter: Kilian, Helmut

(56) Entgegenhaltungen:
- WO-A-01/37163
- DE-A- 10 129 181
- DE-A- 10 222 172
- US-A- 5 871 264
- US-B1- 6 470 401
- US-B1- 6 493 220

## Beschreibung

Die Erfindung betrifft eine PC-Arbeitsplatzanordnung für einen Laborraum mit wenigstens einem Arbeitsplatz mit PC-Anlage aus PC, Monitor und Bedienungsteil und einer Medienversorgung, die im Laborraum angeordnet und mit Abgriffen für den Arbeitsplatz versehen ist.

Ein PC-Arbeitstisch für einen Laborraum mit einer PC-Anlage aus PC, Monitor und Bedienungsteil ist aus der DE 20202250.1 bekannt.

Bei diesem bekannten Arbeitstisch befinden sich alle Teile der PC-Anlage, nämlich der PC, der Monitor und der Bedienungsteil am Arbeitstisch, so dass es sich hierbei um eine Einzelplatzlösung handelt, bei der die am Arbeitstisch vorgesehene PC-Anlage nur zur Benutzung an dem zugehörigen Arbeitstisch bestimmt und geeignet ist.

Der bekannte PC-Arbeitstisch ist darüber hinaus insofern bedienungs- und betreibungsunfreundlich, als der am Arbeitstisch vorgesehene PC viel Platz in Anspruch nimmt und auf Grund seines Gewichtes, die Beweglichkeit des Arbeitstisches beeinträchtigt.

Die der Erfindung zugrunde liegende Aufgabe besteht daher darin, eine PC-Arbeitsplatzanordnung der eingangs genannten Art zu schaffen, die bedienungs- und benutzungsfreundlich ist und insbesondere platzsparend ausgebildet ist.

Die erfindungsgemäße PC-Arbeitsplatzanordnung soll insbesondere so ausgebildet sein, dass eine Nutzung eines einzigen PCs an mehreren Arbeitsplätzen möglich ist.

Diese Aufgabe wird gemäß der Erfindung dadurch gelöst, dass der Monitor und das Bedienungsteil der PC-Anlage am Arbeitstisch angeordnet sind und der PC in der Medienversorgung eingebaut ist.

Besonders bevorzugte Weiterbildungen und Ausgestaltungen der erfindungsgemäßen PC-Arbeitsplatzanordnung sind Gegenstand der Patentansprüche 2 bis 4.

Im Folgenden wird anhand der zugehörigen Zeichnungen ein besonders bevorzugtes Ausführungsbeispiel der erfindungsgemäßen PC-Arbeitsplatzanordnung näher beschrieben.

### Es zeigen

Fig. 1 in einer perspektivischen Ansicht das Ausführungsbeispiel der erfindungsgemäßen PC-Arbeitsplatzanordnung und

Fig. 2 in einer Ansicht von unten den PC der in Fig. 1 dargestellten Arbeitsplatzanordnung an seiner Einbaustelle in einer Medienversorgung.

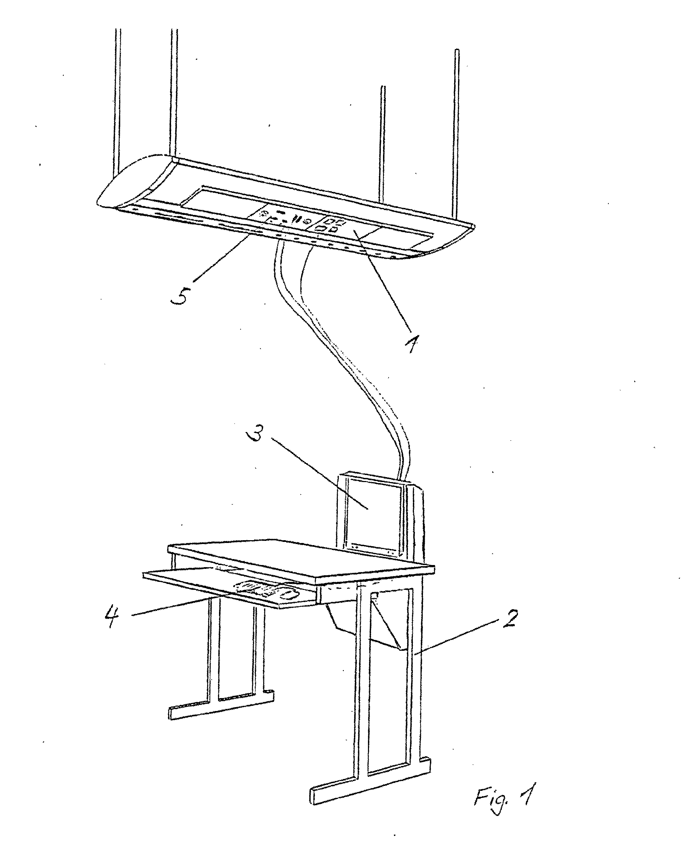

Wie es in Fig. 1 dargestellt ist, ist in einem Laborraum üblicher Weise eine Medienversorgung vorgesehen, die die zum Arbeiten im Laborraum erforderlichen Medien liefert.

Diese Medienversorgung kann in Form eines Arbeitsplatzmoduls vorgesehen oder als im Laborraum insbesondere parallel zur Decke vorgesehene durchgehende Medienversorgung 1 ausgebildet sein, die in Fig. 1 dargestellt ist.

In einem Laborraum, insbesondere in einem Laborschulungsraum befinden sich Arbeitsplätze insbesondere Arbeitstische 2 für z.B. Schüler oder Studenten, die über Abgriffe an der Medienversorgung 1 mit den notwendigen Medien versorgt werden können.

Um bestimmte Arbeitsprogramme auszuführen, sind die Arbeitsplätze weiterhin mit PC-Anlagen ausgerüstet, die wenigstens einen PC 5, einen Monitor 3 und einen Bedienungsteil 4 beispielsweise eine Tastatur bzw. zusätzlich eine Maus umfassen.

Wie es in Fig. 1 weiterhin dargestellt ist, sind bei der erfindungsgemäßen PC-Arbeitsplatzanordnung der Monitor 3 und der Bedienungsteil 4 sowie ggf. die nicht dargestellte Maus am Arbeitsplatz 2, das heißt am Arbeitstisch selbst angeordnet und befindet sich der PC 5 an der Medienversorgung 1. Der PC 5 ist über entsprechende Datenleitungen mit den übrigen Teilen der PC-Anlage verbunden.

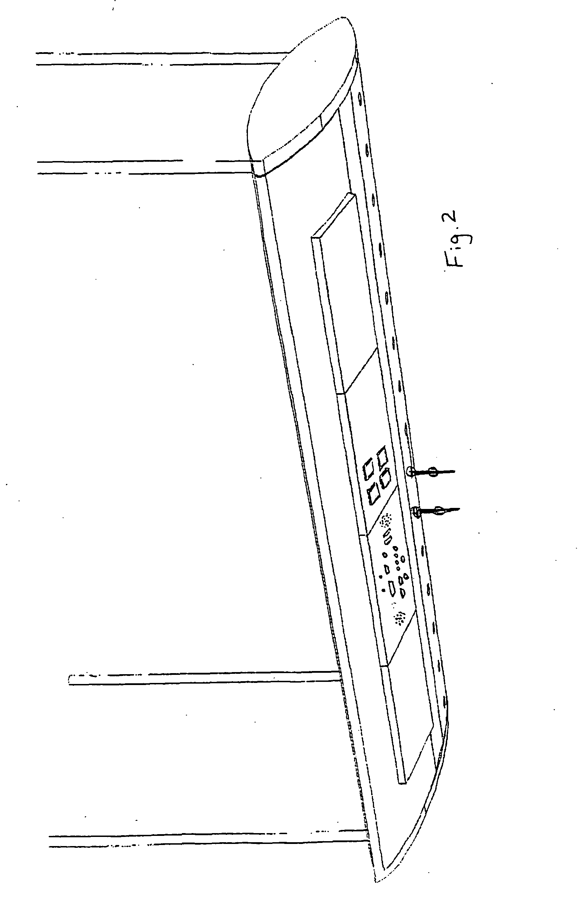

Wie es in Fig. 2 dargestellt ist, ist in der Medienversorgung 1 u.a. eine elektrische Versorgung vorgesehen und ist der PC 5 in Form eines den anderen Medienversorgungen insbesondere der elektrischen Medienversorgung 1 entsprechenden Modul in die Medienversorgung eingebaut. Die Abmessungen diese Moduls entsprechen den Abmessungen der übrigen Module.

Wie es weiterhin in Fig. 2 dargestellt ist, ist der PC 5 vorzugsweise mit mehr als einer Schnittstelle beispielsweise zwei bis vier Schnittstellen versehen, über die mehr als ein Arbeitstisch, das heißt bis zu vier Arbeitstische angeschlossen werden können und ist der PC 5 so ausgebildet, dass an allen vier Arbeitsplätzen unter Benutzung desselben PC 5 bis zu vier verschiedene Arbeitsprogramme ausgeführt werden können.

Die elektrische Versorgung des PC 5 kommt vorzugsweise über die in der Medienversorgung vorgesehene elektrische Versorgung, an die der PC 5 angeschlossen ist.

Wenn in einem Laborraum mehrere PC 5 vorgesehen sind, die mit einem oder mehreren Arbeitsplätzen verbunden sind, können alle PC 5 vernetzt und mit einem zentralen Server beispielsweise am Lehrerarbeitstisch verbunden sein.

Dadurch, dass gemäß der Erfindung die PC-Anlage in den PC und die übrigen Bauteile aufgeteilt ist und der PC vom Arbeitstisch entfernt an der Medienversorgung vorgesehen ist, ergibt sich am Arbeitstisch eine entsprechende Platzersparnis und sind die Arbeitstische frei beweglich, was eine Benutzer- und Bedienungsfreundlichkeit bedeutet. Darüber hinaus können mehrere Arbeitsplätze mit einem zentral angeordneten PC an der Medienversorgung verbunden werden, so dass an mehreren Arbeitsplätzen mit demselben PC gearbeitet werden kann, was die Kosten der Arbeitsplatzanordnung erheblich herabsetzt.

## Patentansprüche

1. PC-Arbeitsplatzanordnung für einen Laborraum mit wenigstens einem Arbeitsplatz mit PC-Anlage aus PC (5), Monitor (3) und Bedienungsteil (4) und einer eine elektrische Versorgung aufweisenden Medienversorgung (1), die im Laborraum angeordnet ist und mit Medienabgriffen für den Arbeitsplatz versehen ist, **dadurch gekennzeichnet, dass** der Monitor (3) und der Bedienungsteil (4) vom PC (5) getrennt sind, der Monitor (3) und der Bedienungsteil (4) am Arbeitsplatz (2) angeordnet sind und der PC (5) vom Arbeitstisch entfernt in der Medienversorgung (1) eingebaut und an die elektrische Versorgung der Medienversorgung (1) angeschlossen ist.

2. PC-Arbeitsplatzanordnung nach Anspruch 1, **dadurch gekennzeichnet, dass** der PC (5) mit bis zu vier Schnittstellen zum Anschluss von bis zu vier Arbeitsplätzen versehen und so ausgebildet ist, dass er parallel bis zu vier verschiedene Programme ausführen kann.

3. PC-Arbeitsplatzanordnung nach Anspruch 1 oder 2, **dadurch gekennzeichnet, dass** der PC (5) mit anderen PCs im Laborraum vernetzt ist.

4. PC-Arbeitsplatzanordnung nach Anspruch 1, 2 oder 3, **dadurch gekennzeichnet, dass** der oder die PCs an die in der Medienversorgung (1) vorgesehene elektrische Versorgung angeschlossen ist oder sind.

## Claims

1. Computer workstation for a laboratory comprising at least one workstation including a computer unit having a personal computer (5), a monitor (3) and an operating panel (4), and a medium supply (1) including an electrical supply, which medium supply is arranged in the laboratory and provides medium terminals for the workstation, **characterized in that** the monitor (3) and the operating panel (4) are separate from the personal computer (5), and **in that** the monitor (3) and the operating panel (4) are arranged at the workstation (2) and the personal computer (5) is accommodated within the medium supply (1) remote from the working table and is connected to the electrical supply of the medium supply (1).

2. Computer workstation according to claim 1, **characterized in that** the personal computer (5) comprises up to 4 interfaces for connection with up to 4 workstations and is configured to execute in parallel up to 4 different programs.

3. Computer workstation according to claim 1 or 2, **characterized in that** the personal computer (5) is connected to other personas computers in the laboratory.

4. Computer workstation according to claim 1, 2 or 3, **characterized in that** the personal computer or the multiple personal computers is/are connected to the electrical supply within the medium supply (1).

## Revendications

1. Poste de travail avec ordinateur pour un laboratoire, comportant au moins un poste de travail équipé d'un système informatique, formé par un ordinateur (5), un écran (3) et un élément de commande (4), et d'un ensemble d'alimentation (1) avec une alimentation électrique, qui est monté dans le laboratoire et est muni de prises pour le poste de travail, **caractérisé en ce que** l'écran (3) et l'élément de commande (4) sont séparés de l'ordinateur (5), l'écran (3) et l'élément de commande (4) étant disposés sur le poste de travail (2), et l'ordinateur (5), éloigné de la table de travail, est intégré dans l'ensemble d'alimentation (1) et est raccordé à l'alimentation électrique de l'ensemble d'alimentation (1).

2. Poste de travail avec ordinateur selon la revendication 1, **caractérisé en ce que** l'ordinateur (5) est équipé de quatre interfaces maximum pour le raccordement à quatre postes de travail maximum, et est réalisé de telle sorte qu'il peut exécuter en parallèle jusqu'à quatre programmes différents.

3. Poste de travail avec ordinateur selon la revendication 1 ou 2, **caractérise en ce que** l'ordinateur (5) peut être mis en réseau avec d'autres ordinateurs dans le laboratoire.

4. Poste de travail avec ordinateur selon la revendication 1, 2 ou 3, **caractérisé en ce que** le ou les ordinateurs est ou sont raccordés à l'alimentation électrique prévue dans l'ensemble d'alimentation (1).
